**Europäisches Patentamt**

(19) **European Patent Office**

**Office européen des brevets**

(11) Publication number: **0 195 227**

**A2**

(12) # EUROPEAN PATENT APPLICATION

(21) Application number: **86101601.2**

(22) Date of filing: **07.02.86**

(51) Int. Cl.⁴: **G 11 B 13/04**
**G 11 B 11/10**

(30) Priority: **20.03.85 JP 54430/85**

(43) Date of publication of application:
**24.09.86 Bulletin 86/39**

(84) Designated Contracting States:
**DE FR GB**

(71) Applicant: **HITACHI, LTD.**
**6, Kanda Surugadai 4-chome Chiyoda-ku**
**Tokyo 100(JP)**

(72) Inventor: **Miyamura, Yoshinori**
**2196-88. Hirai Hinodemachi**
**Nishitama-gun Tokyo(JP)**

(72) Inventor: **Kato, Tsuyoshi**
**1-48-18, Akatsuki-cho**
**Hachioji-shi Tokyo(JP)**

(72) Inventor: **Ojima, Masahiro**
**1-14-26, Shakujii-machi**
**Nerima-ku Tokyo(JP)**

(72) Inventor: **Kaku, Toshimitsu**
**1-16-84, Nishihashimoto**
**Sagamihara-shi Kanagawa-ken(JP)**

(72) Inventor: **Tsunoda, Yoshito**
**6-24-12-316, Mure**
**Mitaka-shi Tokyo(JP)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Magneto-optical disc memory.**

(57) Magneto-optical disc memory.

In a recording medium which has a disc-like substrate (1) and a magnetic film (2) provided thereon so that the data can be written thereon relying upon the change in the direction of magnetization, a magneto-optical disc-memory wherein said magnetic film (2) is provided with spiral or concentric guide tracks (21) which have said recording medium with a magnetic pole of a direction opposite to that of a recording region (22) between said guide tracks, and which further have an optical head that can be relatively moved in the radial direction of said recording medium, said optical head being equipped with an optical system (11, 12, 13) which applies a light beam (14) onto the recording region of said recording medium to write or reproduce the data and which also applies a light beam (15) to erase the data, and said optical head being further equipped with a detector system (16, 17, 18) which detects the direction of polarization of the light beam reflected by said recording medium.

*FIG. 3*

TITLE OF THE INVENTION

MAGNETO-OPTICAL DISC MEMORY

BACKGROUND OF THE INVENTION

The present invention relates to a magneto-optical disc memory, and particularly to a magneto-optical disc memory which is adapted to the over-write.

A known magneto-optical disc memory consists of using a vertical magnetic film as a recording medium, irradiating the recording medium with a laser beam so that the magnetization thereof is once lost by the heat of optical energy, inverting the direction of magnetization to record and/or erase the data, and detecting the rotation of polarizable face of light reflected by the recording medium thereby to reproduce the data.

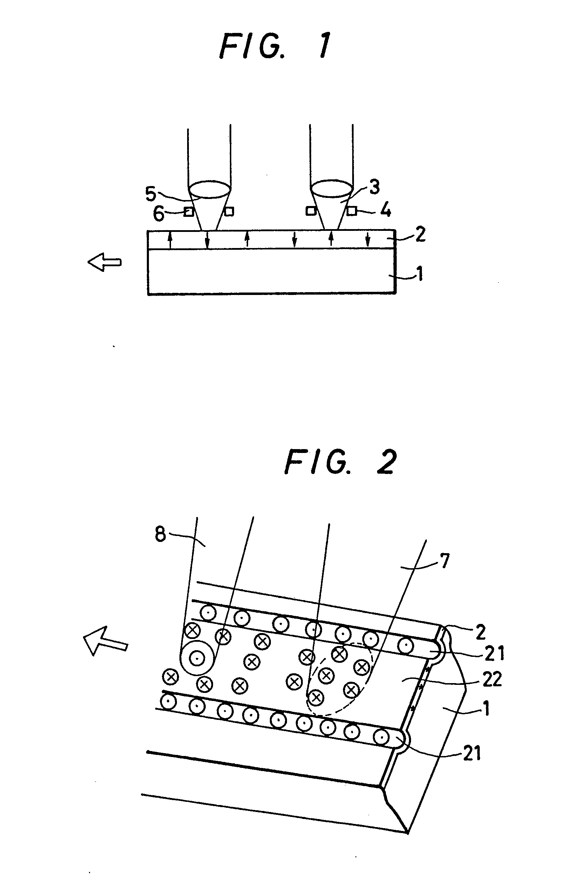

The memory of this type has been disclosed, for example, in Japanese Patent Laid-Open No. 117703/1984 according to which, as shown in Fig. 1, two optical heads 3, 5 and corresponding two magnetic heads 4, 6 are provided, the one side being used for erasing the data and the other side being used for writing the data, in order to perform the so-called over-write which records the data while erasing the old data.

However, the memory of this type requires two magnetic heads, and further requires clumsy adjustment
to bring them into position with respect to the two
optical heads and the tracks on the disc.

SUMMARY OF THE INVENTION

The object of the present invention is to provide
a magneto-optical disc memory which is free from the
above-mentioned defects, which can be cheaply manufactured,
which requires easy adjustment, and which is capable
of performing the over-write.

To achieve the above-mentioned object according
to the present invention, the over-write is realized
by utilizing the magnetic field which is generated
from a magnetization film of a portion surrounding
the region where the data is to be recorded and erased,
and by placing the erase beam always at a position
in front of the write/reproduce beam, without using
any separate device for generating magnetic field
for recording and erasing the data.

BRIEF DESCRIPTION OF THE DRAWINGS

Fig. 1 is a section view showing optical heads
and a disc used for a conventional magneto-optical
disc memory;

Fig. 2 is a diagram showing an optical head and
a disc portion used in the disc memory of the present
invention;

Fig. 3 is a diagram showing a disc memory which prepares two beams from one source of laser beam according to an embodiment of the present invention; and

Fig. 4 is a diagram which explains the principle of operation for recording and erasing data according to the present invention.

DESCRIPTION OF THE PREFERRED EMBODIMENTS

An embodiment of the present invention will be described below in conjunction with Fig. 2. A magnetic film 2 is adhered by sputtering on the surface of a substrate 1. The magnetic film is provided with guide tracks 21, and the data is recorded onto a land (recording region) 22 between the guide tracks 21 which have a magnetic pole of a direction different from that of the land (recording region) 22. Here, the recording region 22 is irradiated with an erase beam 7 which is positioned in front of the write beam 8 in the direction of rotation. The magnetic film 2 is then heated at a temperature higher than a Curie point thereof and loses the magnetization. Accompanying the rotation, this portion is no more irradiated with the laser beam and cools gradually, and is then magnetized in the direction opposite to the direction of magnetic field due to the action of magnetic field of the outside (guide tracks 21).

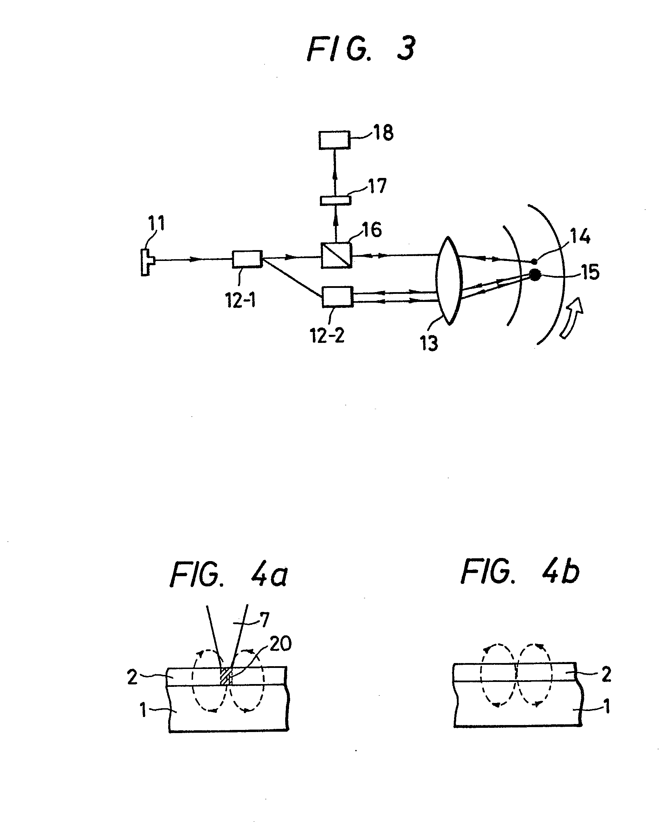

This is a property specific to the magnetic field. Referring to Fig. 4(a), a portion (exposed area) 20 irradiated with the laser beam temporarily loses the magnetization. Due to the action of the surrounding magnetic field, however, this portion possesses the magnetic pole in the direction as shown in Fig. 4(b). That is, the portion irradiated with the laser beam possesses a magnetic pole in the direction opposite to that of the peripheral areas. If the laser beam is continuously applied, the data that has been recorded can be erased.

Next, to record the data, the magnetic film 2 is heated by the write beam 8 which is located just behind the erase beam 7 and which has a diameter smaller than that of the erase beam 7, at a temperature higher than the Curie point thereof so that the magnetization is once lost in the same manner as described above. The recording region is then magnetized as it is cooled in the direction opposite to the direction of the magnetic field due to the action of magnetic field of the portion that was erased and magnetized again previously. Therefore, the direction of magnetic field is different between the recorded portion and the portion where no data is recorded.

Described below is a method of producing a write beam and an erase beam which is wider than the write beam in conjunction with Fig. 3. The beam from a source of laser beam 11 is split into two beams through an acousto-optic modulator (hereinafter referred to as A/O modulator) 12-1. One beam passes through a polarization beam splitter 16 as a write beam or a reproduce beam, and forms a focal point 14 on the magnetic film being deflected by a focusing lens 13. Another beam which will be used as an erase beam is passed, as required, through a second A/O modulator 12-2 to widen the beam width, and is passed through the focusing lens 13 to form a focal point 15 on the magnetic film.

The beam from a single source of laser beam can also be split into two or more beams by using a diffraction grating, in addition to using the A/O modulators.

Instead of using the A/O modulator 12-2, furthermore, the erase beam can be widened by increasing the energy of erase beam so that the beam diameter is substantially increased. In this case, only one A/O element is used, and the optical system can be easily adjusted. It is further allowable to defocus the erase beam so that it is projected with an increased diameter onto the magnetic film.

Reproduction of the recorded signal will be described below in conjunction with Fig. 3.

When the data is to be reproduced, the write beam
of a small output is produced and is applied as a
reproduce beam onto the magnetic film.  At this moment,
the erase beam is shut off by the A/O modulator 12-1
or its intensity is decreased, so that the magnetic
film will not be erased.  Depending upon the direction
of magnetization of the magnetic film, the light reflected
by the magnetic film exhibits change in the polarizable
face thereof due to Kerr effect.  The light is then
reflected by the polarization beam splitter 16 and
passes through a polarizer 17 and is changed into
the intensity of light, which is then converted into
an electric signal by a photo-detector 18.  Here,
optical systems in a servo system such as automatic
focusing system and tracking system, are not described.

The above description has dealt with the embodiment
where the erase beam and the write beam were produced
from a single source of laser beam.  However, the
object of the present invention can also be accomplished
by using a plurality of light sources to produce an
erase beam and a write beam, and projecting the beams
onto the magnetic film through a focusing lens.

According to the present invention, two beams
are produced using a single optical head to erase, write and reproduce the data. Therefore, no magnetic head is required, making it possible to provide a magento-optical disc memory which features a simply constructed head portion and which is capable of effecting the over-write.

1. In a magneto-optical recording medium which has a
   disc-like substrate (1) and a magnetic film (2)
   provided thereon so that the data can be written
   thereon relying upon the change in the direction
   of magnetization, a magneto-optical disc memory
   wherein said magnetic film (2) is provided with
   guide tracks (21) which have said magneto-optical
   recording medium with a magnetic pole of a direction
   opposite to that of a recording region (22) between
   said guide tracks, and which further have an optical
   head that can be relatively moved in the radial
   direction of said recording medium, said optical
   head being equipped with an optical system (11, 12, 13)
   which applies a light beam (14) onto the recording
   region (22) of said recording medium to write or reproduce the data and which also applies a light beam
   (15) to erase the data, and said optical head being
   further equipped with a detector system (16, 17, 18)
   which detects the direction of polarization of the
   light beam reflected by said recording medium.

2. A magneto-optical disc memory according to claim 1,
   wherein the spot of a light beam (15) for erasing the
   data is selected to be wider than the spot of a light
   beam (14) for writing or reproducing the data.

3. A magneto-optical disc memory according to claim 1,
   wherein the spot of a light beam (15) for erasing the
   data is located relatively in front of the spot of a
   light beam (14) for writing or reproducing the data
   in a direction in which said recording medium rotates.

4. A magneto-optical disc memory according to claim 2,
   wherein the spot of a light beam (15) for erasing the
   data is located relatively in front of the spot of a light beam (14) for writing or reproducing the data
in a direction in which said recording medium rotates.

5. A magneto-optical disc memory according to claim 1,
   wherein said optical system obtains the light beams
   for writing, reproducing and erasing the data from
   the same source of light (11).

6. A magneto-optical disc memory according to claim 2,
   wherein said optical system obtains the light beams
   for writing, reproducing and erasing the data from
   the same source of light (11).

7. A magneto-optical disc memory according to claim 1,
   wherein said optical system is equipped with means
   (12-1) which divides the same light beam into the
   light beam (14) for writing or reproducing the data,
   and the light beam (15) for erasing the data.

8. A magneto-optical disc memory according to claim 7,
   wherein means (12-1) for dividing the light beam is
   an acousto-optic modulator.

9. A magneto-optical disc memory according to claim 1,
   wherein said optical system focuses the light beam (15)
   for erasing the data onto said recording region (22)
   by using means (13) which focuses the light beam (14)
   for writing or reproducing the data onto said recor-
   ding region (22).

0195227

# FIG. 1

# FIG. 2

0195227

## FIG. 3

## FIG. 4a

## FIG. 4b